# EUROPEAN PATENT APPLICATION

(11) **EP 2 209 224 A1**
(43) Date of publication of application: **21.07.2010**
(21) Application number: 07816773.1
(22) Date of filing: 07.11.2007
(51) Int. Cl.: H04B 7/212

(54) **METHOD AND DEVICE FOR SCHEDULING RESOURCE BETWEEN DIFFERENT TDD SYSTEMS**

(71) Applicant: Alcatel-Lucent Shanghai Bell Co., Ltd., Pudong Xinqu Shanghai 201206 (CN)
(72) Inventor: LI, Dong, Shanghai 201206 (CN); CAI, Liyu, Shanghai 201206 (CN); YANG, Hongwei, Shanghai 201206 (CN)
(74) Representative: Kohler Schmid Möbus
(86) International application number: PCT/CN2007/003161
(87) International publication number: WO 2009/059460

(57) **Abstract**

A method and an apparatus for scheduling resources between a first TDD system and a second TDD system are disclosed, frames required for transmission by the first TDD system including a preamble sequence, an up-link subframe and a down-link subframe, the method comprises steps of allocating time and frequency resources for the first TDD system and the second TDD system based on service parameters of the first TDD system and service parameters of the second TDD system, and mapping the coded modulation data stream of the first TDD system and the second TDD system onto corresponding allocated time and frequency resources. According to the method and apparatus of the present invention, not only the latency of the traffic service, control signaling and the feedback transmission over the air interface can be reduced, but the compatibility requirement for existing system can also be reached. Moreover, resource allocation can be performed between different systems based on respective service loads.

## Description

### BACKGROUND OF THE INVENTION

### 1. Field of the Invention

The present invention relates to time-frequency resource scheduling between wireless communication systems, which can reduce the transmission latency of a new TDD system while provide backward compatibility for existing system.

### 2. Description of Prior Art

In a wireless communication system, there are two main duplex modes including frequency division duplex (FDD) and time division duplex (TDD). A TDD system has distinct advantages over a FDD system as following:
- In a TDD system, the time division ratio between the up-link and the down-link can be adjusted flexibly to adapt unbalanced traffic of the up-link and the down-link.
- Unlink the FDD system, the TDD system does not need the bandwidth to be allocated in pair, which simplifies the requirement of wireless spectrum allocation.
- In the TDD system, the transceivers operate asynchronously either at the base station or at the mobile station, which simplifies the complexity of system hardware design.
- In the TDD system, some operations that require close loop processing can be performed by means of the symmetry of the up-link and the down-link due to the conformity of the up-link frequency and the down-link frequency.

In view of the above advantages of the TDD system, TDD mode is used in some wireless mobile communication systems such as a WiMAX system. However, in the TDD system, the latency is long due to the transmission intervals between the up-link and the down-link, which cause the latency of the control signaling and the feedback transmission over the air interface. A broadband wireless system with reduced latency and compatible with the existing narrowband wireless system is needed as the next generation broadband wireless communication technology develops.

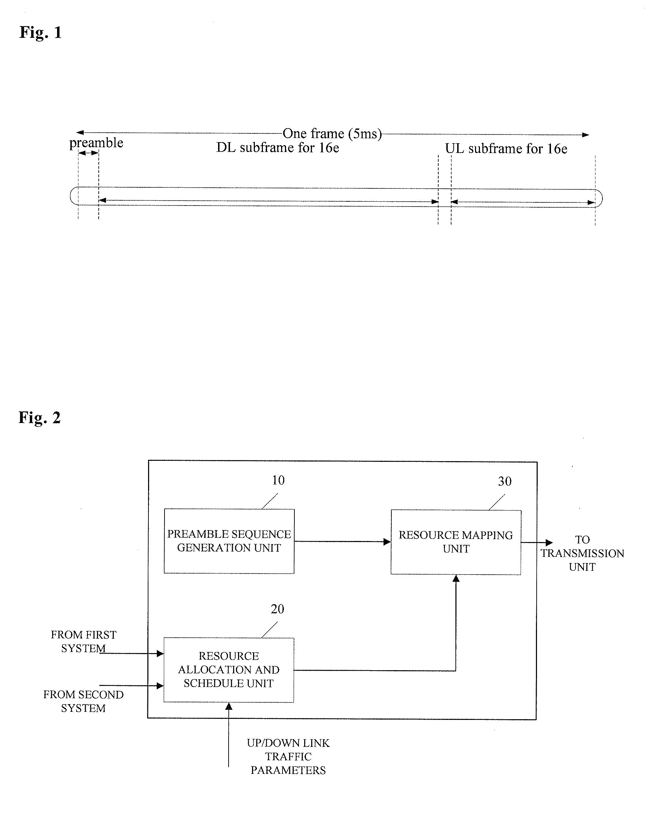

A frame structure of a convention TDD wireless system such as an IEEE 802.16e system is shown in Fig. 1. As shown in Fig. 1, each frame represents a time period of 5 ms which is divided into a preamble portion, a down-link subframe and an up-link subframe. As is well known, the latency is defined as the one-way transit time between a packet being available at the transmitter and the availability of this packet at the receiver. As can be seen from Fig. 1, the latency of convention TDD wireless system is too long to meet the requirement of broadband systems.

Therefore, a wireless communication technology which can reduce the latency while can provide backward compatibility is needed.

### SUMMARY OF THE INVENTION

In view of the above problems of prior art, the present invention is achieved. The object of the present invention is to provide a method and apparatus for scheduling resources between different TDD systems, which can reduce transmission latency and also can provide backward compatibility.

In an aspect of the present invention, a method for scheduling resources between a first TDD system and a second TDD system is provided, frames required for transmission by the first TDD system each including a preamble sequence, an up-link subframe and a down-link subframe, the method comprises the steps of: allocating time and frequency resources for service data of the first TDD system and the second TDD system based on service parameters of the first TDD system and service parameters of the second TDD system, and mapping the coded modulation data stream of the first TDD system and the second TDD system onto corresponding allocated time and frequency resources.

The method preferably further comprises a step of constructing a preamble sequence of the second TDD system based on the preamble sequence of the first TDD system.

The allocation step preferably comprises steps of dividing a frame of the second TDD system into a preamble sequence and multiple mini-frames including up-link sub-miniframes and down-link sub-miniframes, and locating the subcarrier of the first TDD system at the middle, one side or some other place of the allocated spectrum of the second TDD system, and allocating the coded modulation data stream of the first TDD system and the second TDD system to corresponding time and frequency resources.

Preferably, the time resources that can be allocated to the first TDD system and can also be allocated to the second TDD system are allocated to the one whose service load is larger.

Preferably, some subcarriers are reserved as guard bands between the first TDD system and the second TDD system.

Preferably, the ratio between up-link sub-miniframes and down-link sub-miniframes in one mini-frame may be adjustable.

Preferably, the number of the mini-frame included in one frame may be adjustable.

Preferably, each down-link sub-miniframe includes a portion for transmitting mini-frame structure information.

In another aspect of the present invention, an apparatus for scheduling resources between a first TDD system and a second TDD system is provided, frames required for transmission by the first TDD system each including a preamble sequence, an up-link subframe and a down-link subframe, the apparatus comprises a resource allocation and schedule means for allocating time and frequency resources for the first TDD system and the second TDD system based on service parameters of the first TDD system and service parameters of the second TDD system, and a resource map means for mapping the coded modulation data stream of the first TDD system and the second TDD system onto corresponding allocated time and frequency resources.

Preferably, the apparatus also comprises a preamble sequence generator for constructing the preamble sequence of the second TDD system based on the preamble sequence of the first TDD system.

The resource allocation and schedule means is configured to include a means for dividing a frame of the second TDD system into a preamble sequence and multiple mini-frames including up-link sub-miniframes and down-link sub-miniframes, and a means for locating the subcarrier of the first TDD system at the middle, one side or some other place of the allocated spectrum of the second TDD system, and a means for allocating the coded modulation data stream of the first TDD system and the second TDD system to corresponding time and frequency resources.

Preferably, the resource allocation and schedule means is configured to allocate the time resources that can be allocated to the first TDD system and can also be allocated to the second TDD system to the one whose service load is larger.

Preferably, the resource allocation and schedule means is configured to allocate at least some of the other subcarriers to the one of the first TDD system and the second TDD system whose service load is larger.

According to the above up/down-link time-frequency resource allocation for a TDD system, an existing narrowband TDD system and a new broadband TDD system can operate at the same radio frequency carrier in parallel. Specially, the up/down-link time-frequency resource allocation of the existing system can follow the existing frame structure definition, while system latency performance of the new TDD system can be improved due to the reduced frame length. The time-frequency resource allocation ration can be adjusted based on the service loads of the new system and the existing system, thus the existing system with narrower bandwidth can be smoothly evolved into the new system with larger bandwidth.

Furthermore, according to the above preamble sequence design, a preamble sequence of a new TDD broadband system can be generated by spectrum extension based on a preamble sequence of an existing narrowband system. The new preamble sequence can provide backward compatibility for the existing TDD narrowband system and synchronization between systems with multiple base stations, and synchronization between the new TDD broadband system and the existing TDD narrowband system.

According to the method and apparatus of the present invention, not only the latency of the traffic service, control signaling and the feedback transmission over the air interface can be reduced, but the compatibility requirement for existing system can also be reached.

Moreover, according to the method and apparatus of the present invention, resource allocation can be performed between different systems, such as an IEEE 802.16e system and an 802.16m system, based on respective service loads. This is especially useful for the smooth evolvement of the existing system with narrower bandwidth to the new system with larger bandwidth.

### BRIEF DESCRIPTION OF THE DRAWINGS

Embodiments of the present invention will now be described, by way of example only, with reference to the accompanying drawings, in which:
Fig. 1 is a schematic diagram of a frame structure of prior art.
Fig. 2 is a block diagram of an apparatus for scheduling resources between different systems according to an embodiment of the present invention.
Fig. 3 is a schematic diagram of a frame structure according to an embodiment of the present invention.
Fig. 4 is a schematic diagram explaining how a frame structure according to an embodiment of the present invention provides the backward compatibility for the frame structure shown in Fig.1, and how to schedule resources based on respective service loads.
Fig. 5 is a schematic diagram explaining how a frame structure according to an embodiment of the present invention provides the backward compatibility for the frame structure shown in Fig.1, and how to schedule resources based on respective service loads.
Fig. 6 is a flow diagram of a method for scheduling resources between different TDD systems according to an embodiment of the present invention.

### DETAILED DESCRIPTION OF THE INVENTION

Hereinafter, the embodiments of the present invention will be described with reference to the drawings.

As shown in Fig. 2, an apparatus for scheduling resources between different TDD systems includes a preamble sequence generation unit 10 for generating a preamble sequence, a resource allocation and schedule unit 20 for performing resource allocation and schedule on service data from a first system and a second system based on up-link-down-link service parameters, and a resource mapping unit 30 for mapping the service data from the first system and the second system onto corresponding resources. Operations and functions of the above units will be described hereinafter.

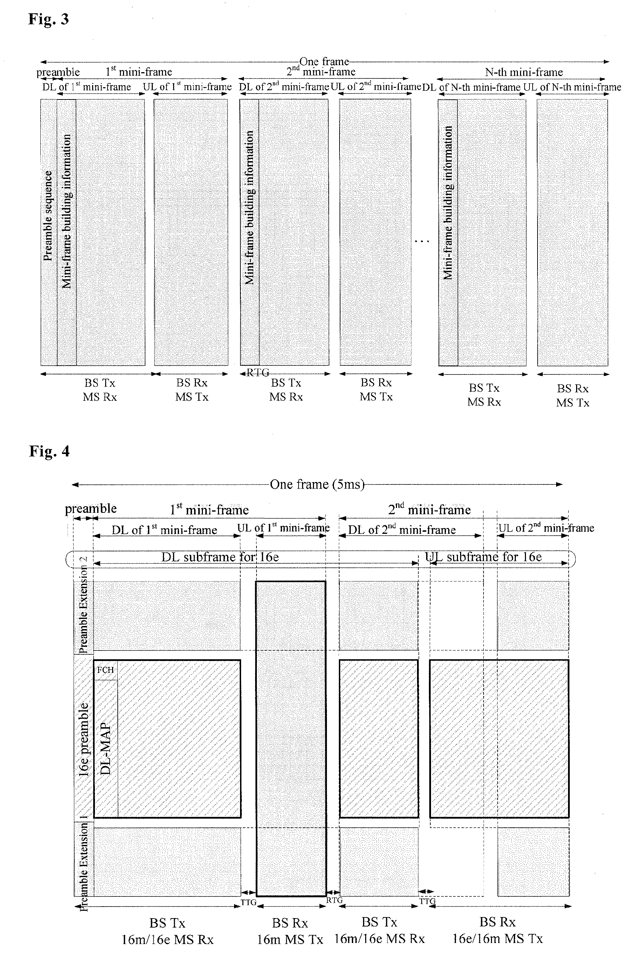

According to an embodiment of the present invention, for an entirely new TDD broadband system, i.e. a TDD system with low transmission latency, the resource allocation and schedule unit 20 divides a frame structure (shown in Fig.1) of a preamble sequence+ a up-link sub-frame+ a down-link sub-frame into a frame structure of a preamble sequence + N mini-frame (N is not less than 2), and each one of the mini-frames includes one down-link sub-miniframe and one sub-miniframe, as shown in Fig.3. Naturally, the number of the mini-frames included in one frame can be parameterized and can be adjusted dynamically. Besides, the ratio between the up-link sub-miniframes and the down-link sub-miniframes in a mini-frame can be configured and adjusted.

As shown in Fig. 3, the down-link sub-miniframe of each mini-frame includes mini-frame structure information indicating how the mini-frame is constructed, thereby the receiver can be informed the mini-frame structure information to perform data detection and reception.

The preamble symbol acts as training sequence for the purpose of frame synchronization, time and frequency synchronization and compensation, and cell identification. Though dividing one frame into multiple mini-frames, the duration of one uplink and downlink transmission is reduced greatly, thus decreasing the transmission latency efficiently.

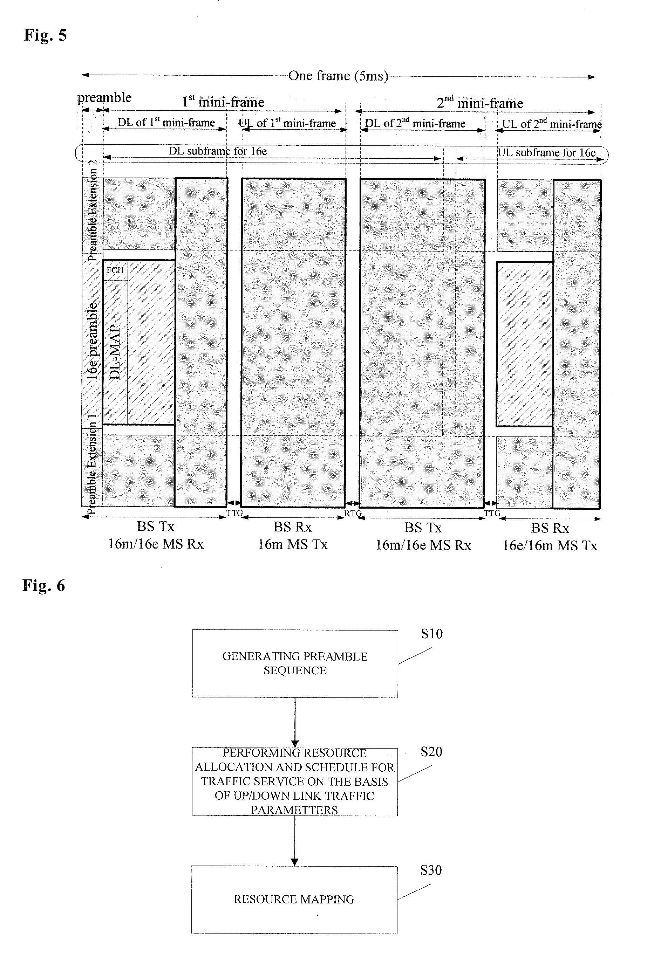

Fig. 4 and Fig. 5 show how a frame structure according to an embodiment of the present invention provides the backward compatibility for the frame structure shown in Fig. 1, and how to schedule resources based on respective service loads. In these figures, it is assumed that there are two mini-subframes in each frame (i.e., N=2). Note also that in the Figs. 4 and 5 the IEEE 802.16e system and 802.16m systems are just taken as examples of existing systems with narrower-bandwidth and new system to illustrate the proposed ideas of the invention.

As shown in Fig. 4, the preamble sequence generation unit 10 constructs a new frame sequence on basis of the preamble sequence of the existing system, such as the IEEE 802.16e system. In details, the preamble sequence of the first system is located at proper place (such as the middle, one side or other places) of the allocated spectrum to the second system, and one or two preamble extensions are appended at other places. The preamble extension of the new TDD broadband system shall fulfill some requirements such as low PAPR for the time domain preamble signal, good cross-correlation properties among different preamble sequences in frequency domain so as to improve reception performance. The receiver efficiently uses the correlation of the preamble sequences to achieve synchronization in time or in frequency. Note that if the backward compatibility is turned off, the preamble sequence shall be replaced by a new preamble sequence or modified existing preamble -based sequence.

In frequency, some subcarriers are reserved between the spectrum of the first system and the second system as guard bands between the new and existing systems, so that the receiver can easily perform frequency filtering.

The Base stations (BS) can dynamically schedule the time-frequency resources between the new system and the existing system depending on respective service loads of the new and existing systems. For instance, in Fig. 4, it is assumed that the existing IEEE 802.16e system has a large traffic demand, which is the case when the new TDD broadband system is initially established, so the resource allocation and schedule unit 20 allocates most the reserved sucarriers to the existing IEEE 802.16e system, i.e., the first system. As it can be seen from Fig. 4, the second transmit/receive transition position of BS is located at the transmit/receive transition position of existing system, while not the transmit/receive transition position of the second mini-frame.

In Fig. 5, it is assumed that just a little traffic service is demanded in the first system and large traffic is required in the second system, so the resource allocation and schedule unit 20 allocates most the reserved subcarriers to the second system, i.e., the IEEE 802.16m system. As it can be seen from Fig. 5, the second transmit/receive transition position of BS is located at the transmit/receive transition position of new system, i.e., the transmit/receive transition position of the second mini-frame.

After resource allocation and schedule on the service data of the first system and the second system, the resource mapping unit 30 maps the allocated time and frequency resources onto corresponding service data to achieve dynamic resource schedule between different TDD systems.

Fig. 6 is a flow diagram of a method for scheduling resources between different TDD systems according to an embodiment of the present invention.

As shown in Fig. 6, at step S 10, the preamble sequence generation unit 10 constructs a new broadband frame sequence on basis of the preamble sequence of the first system, or an entirely new preamble sequence to fulfill some requirements such as low PAPR and good cross-correlation properties if the backward compatibility is turned off.

At step S20, the resource allocation and schedule unit 20 performs resource allocation and schedule on the service data of the first system and the second system according to up-link/down-link service parameters, such as the service load of the first system and the service load of the second system. Taken an existing IEEE 802.16e system and a new broadband IEEE 802.16m system as examples,
the existing IEEE 802.16e system has a large traffic demand (for example, more than a preset threshold) when the new TDD broadband system is initially established, so the resource allocation and schedule unit 20 allocates most the reserved subcarriers to the existing IEEE 802.16e system, i.e., the first system. When the traffic demand of the existing first system decreases and the traffic demand of the new broadband system increases (for example, more than a preset threshold), then the resource allocation and schedule unit 20 allocates most the reserved subcarriers to the second system, i.e., the IEEE 802.16m system.

At step S30, the resource mapping unit 30 maps the allocated time and frequency resources onto corresponding service data to achieve dynamic resource schedule between different TDD systems.

According to the method and apparatus of the present invention, not only the latency of the traffic service, control signaling and the feedback transmission over the air interface can be reduced, but the compatibility requirement for existing system can also be reached.

Moreover, according to the method and apparatus of the present invention, resource allocation can be performed between different systems, such as an IEEE 802.11e system and an 802.11m system, based on respective service loads. This is especially useful for the smooth evolvement of the existing system with narrower bandwidth to the new system with larger bandwidth.

The foregoing description gives only the preferred embodiments of the present invention. It is obvious to those skilled in the art that any modification and substitution or like made within the spirit and principle of the present invention should be encompassed by the scope of the present invention. The protection scope of the present invention is defined by the appended claims.

## Claims

1. A method for scheduling resources between a first TDD system and a second TDD system, frames required for transmission by the first TDD system each including a preamble sequence, an up-link subframe and a down-link subframe, the method comprising steps of:
allocating time and frequency resources for service data of the first TDD system and the second TDD system based on service parameters of the first TDD system and service parameters of the second TDD system, and
mapping the coded modulation data stream of the first TDD system and the second TDD system onto corresponding allocated time and frequency resources.

2. The method according to claim 1, further comprising a step of constructing a preamble sequence of the second TDD system based on the preamble sequence of the first TDD system.

3. The method according to claim 1, wherein the allocation step comprising steps of
dividing a frame of the second TDD system into a preamble sequence and multiple mini-frames including up-link sub-miniframes and down-link sub-miniframes,
locating the subcarrier of the first TDD system at the middle, one side or some other place of the allocated spectrum of the second TDD system, and
allocating the coded modulation data stream of the first TDD system and the second TDD system to corresponding time and frequency resources.

4. The method according to claim 3, wherein the time-frequency resources that can be allocated to the first TDD system and can also be allocated to the second TDD system are allocated to the one whose service load is larger.

5. The method according to claim 2, wherein some subcarriers are reserved as guard bands between the first TDD system and the second TDD system.

6. The method according to claim 3, wherein the ratio between up-link sub-miniframes and down-link sub-miniframes in one mini-frame is adjustable.

7. The method according to claim 3, wherein the number of the mini-frame included in one frame is adjustable.

8. The method according to claim 3, wherein each down-link sub-miniframe includes a portion for transmitting mini-frame structure information.

9. An apparatus for scheduling resources between a first TDD system and a second TDD system is provided, frames required for transmission by the first TDD system including a preamble sequence, an up-link subframe and a down-link subframe, the apparatus comprising:
a resource allocation and schedule means for allocating time and frequency resources for service data of the first TDD system and the second TDD system based on service parameters of the first TDD system and service parameters of the second TDD system, and
a resource mapping means for mapping the coded modulation data stream of the first TDD system and the second TDD system onto corresponding allocated time and frequency resources.

10. The apparatus according to claim 9, further comprising a preamble sequence generator for constructing a preamble sequence of the second TDD system based on the preamble sequence of the first TDD system.

11. The apparatus according to claim 9, wherein the resource allocation and schedule means is configured to include:
a means for dividing a frame of the second TDD system into a preamble sequence and multiple mini-frames including up-link sub-miniframes and down-link sub-miniframes,
a means for locating the subcarrier of the first TDD system at the middle, one side or some other place of the allocated spectrum of the second TDD system, and
a means for allocating the coded modulation data stream of the first TDD system and the second TDD system to corresponding time and frequency resources.

12. The apparatus according to claim 11, wherein the resource allocation and schedule means is configured to allocate the time resources that can be allocated to the first TDD system and can also be allocated to the second TDD system to the one whose service load is larger.

13. The apparatus according to claim 11, wherein some subcarriers are reserved as guard bands between the first TDD system and the second TDD system.
